# EUROPEAN PATENT SPECIFICATION

(11) **EP 3 069 597 B1**
(45) Date of publication and mention of the grant of the patent: **08.11.2017**
(21) Application number: 16160574.6
(22) Date of filing: 16.03.2016
(51) Int. Cl.: A01D 75/20

(54) **HEADER WITH A HOMOLOGATION FRAME FOR AN AGRICULTURAL HARVESTER**
ERNTEVORSATZ MIT HOMOLOGISIERUNGSRAHMEN FÜR EINE LANDWIRTSCHAFTLICHE ERNTEMASCHINE
TÊTE DE RÉCOLTE AVEC CADRE D'HOMOLOGATION POUR MOISSONNEUSE-BATTEUSE

(30) Priority: 16.03.2015 BE 201505153
(43) Date of publication of application: 21.09.2016
(73) Proprietor: CNH Industrial Belgium nv, 8210 Zedelgem (BE)
(72) Inventor: VAN OVERSCHELDE, Pieter, 8200 Sint-Andries (BE); VAN VOOREN, Sandor, 8340 Sijsele-Damme (BE); GANTOIS, Sam, 8730 Beernem (BE)
(74) Representative: CNH Industrial IP Department

(56) References cited:
- DE-A1-102013 001 651
- DE-C- 299 887
- US-A1- 2013 081 370

## Description

### BACKGROUND OF THE INVENTION

The present invention relates to agricultural harvesters, and, more specifically to homologation frames used with agricultural harvesters.

An agricultural harvester known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue system, which may utilize a straw chopper to process the non-grain material and direct it out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger conveys the grain to a grain tank for temporary storage. The grain accumulates to the point where the grain tank is full and is discharged to an adjacent vehicle such as a semi trailer, gravity box, straight truck or the like by an unloading system on the combine that is actuated to transfer grain into the vehicle.

For the European market, it is necessary in certain countries to add an additional frame around the header of a combine to provide increased visibility to automobile operators as the combine travels down a public road, particularly at night. The frame is typically equipped with lights, reflectors, vehicle marker boards or other visible indicia which allows drivers in oncoming traffic to more easily see the overall shape and size of the header. The additional frame must comply with various legal and technical requirements of a specific country in which the combine is sold. "Homologation" is the term for the whole approval process, and starts with initial assessments followed by tests according to standards and directives, followed by the preparation of substantiated technical reports to forward to approval authorities in order to obtain the final approval. The additional frame around the header which is necessary for road transport thus may be known as a "homologation frame", which is also the term we will use throughout this patent specification to indicate the frame or bracket carrying the required visibility enhancing safety features.

A folding corn header is configured such that the combine carries the header during road transport, and thus it is necessary to use a homologation frame with the header. The homologation frame is separate from the header and must be attached to the header each time the combine travels on the road. After road travel, for transitioning the combine to a harvest mode, the homologation frame must be removed and set aside. The attachment and removal of the homologation frame to the header takes a lot of time. When harvesting during the night, the homologation frame which is set aside for later use can be difficult to find. Moreover, when the homologation frame is set aside, there is the possibility that the combine can run over the frame and potentially cause damage to the frame and/or combine.

The German patent application published as DE-A-102013001651 discloses protection device for transport protection of a mowing and a collection unit of a corn harvesting machine. The device has multiple segments hingedly connected with each other such that the segments release a mowing and collection unit in front and side in a harvesting position of the mowing and collection unit, and limit and/or cover the mowing and collection unit in front and side in a transport position of the mowing and collection unit. The adjacent segments are pivoted relative to each other around a vertically running axis and a horizontally running axis. The segments are kinematically coupled to the mowing and collection unit. An independent claim is also included for a harvesting machine.

What is needed in the art is a homologation frame that is easier to use with a combine header during road transport.

### SUMMARY OF THE INVENTION

The present invention provides a homologation frame which is attached to the header and foldable between an upright, harvest position and a downward, transport position.

The invention in one form is directed to a header for an agricultural harvester including a framework, a crop gathering arrangement defining a forward end of the header, and a homologation frame attachable to the framework and having at least one visibility enhancing safety feature. The header is characterized in that the homologation frame includes at least two arms which are pivotally attached to the framework, and the homologation frame is movable between an upright position in which the arms extend in a generally upward direction and a downward position in which the arms extend in a generally forward direction. The at least one visibility enhancing safety feature is positioned in association with the forward end of the header when the homologation frame is in the downward position, such that the at least one visibility enhancing safety feature is visible from a front of the harvester.

An advantage of the present invention is that the homologation frame may be easily folded between the upright, harvest position and the downward, transport position, without removing the homologation frame from the header.

Another advantage is that the homologation frame can include an integral screen which inhibits crop material buildup on top of the feeder housing when the homologation frame is in the upright, harvest position.

Yet another advantage is that the homologation frame and the outer wing sections of the header can be folded and unfolded in a specific sequence to transition the header from the transport position to the harvest position, and vice versa.

A still further advantage is that the homologation frame can be moved from the transport to the harvest position, or vice versa, from within the operator cab of the harvester and without having to disembark from the operator cab.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of an embodiment of an agricultural harvester in the form of a combine;
Fig. 2 is a perspective view of an embodiment of a header of the present invention which may be used with the combine of Fig. 1, including an embodiment of a homologation frame of the present invention in a folded, upright folded position;
Fig. 3 is a perspective view of the header shown in Fig. 2, with the homologation frame in an unfolded, downward position;
Fig. 4 is a perspective view of the header shown in Figs. 2 and 3, with the homologation frame in the unfolded, downward position and the outer wing sections of the header in a folded, transport position; and

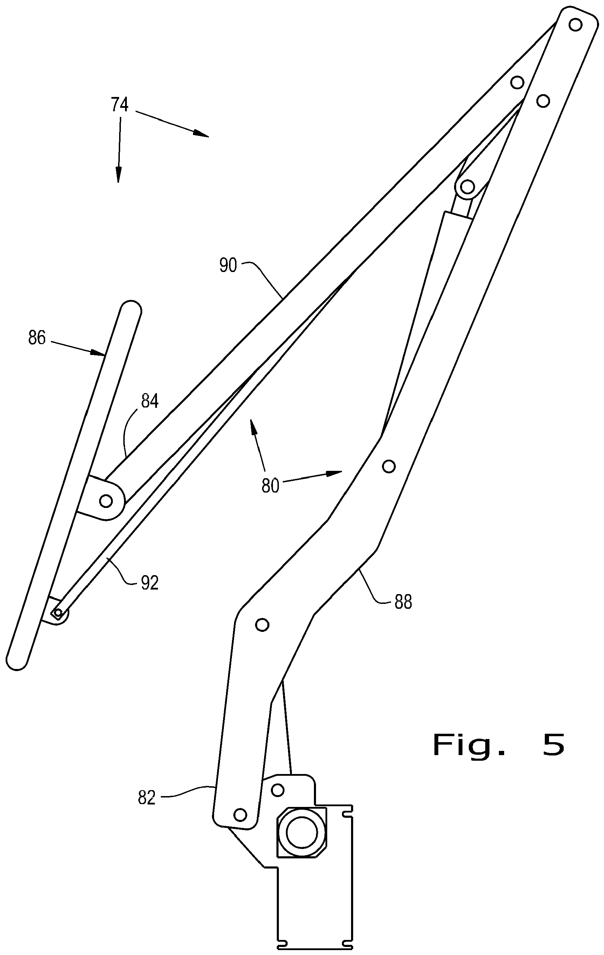

Fig. 5 is a side view of the homologation frame shown in Figs. 2-4 in a nearly folded, upright position.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

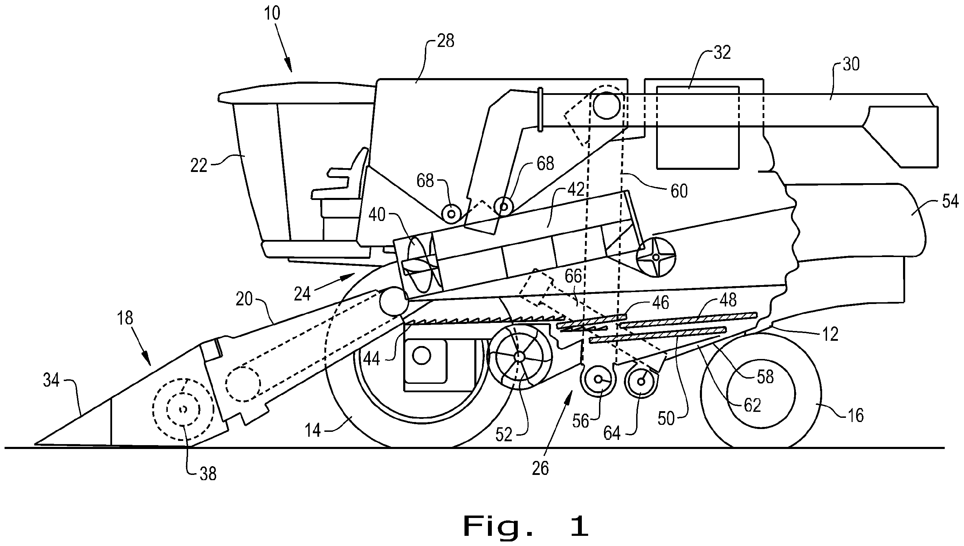

Referring now to the drawings, and more particularly to Fig. 1, there is shown an agricultural harvester in the form of a combine 10, which generally includes a chassis 12, ground engaging wheels 14 and 16, a header 18, a feeder housing 20, an operator cab 22, a threshing and separating system 24, a cleaning system 26, a grain tank 28, and an unloading conveyance 30. Unloading conveyor 30 is illustrated as an unloading auger, but can also be configured as a belt conveyor, chain elevator, etc.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, is also to be understood that combine 10 may include tracks, such as full tracks or half tracks.

Header 18 is mounted to the front of combine 10, and functions to sever and gather the crop material and transport the crop material to the feeder housing 20. In the illustrated embodiment, the header 18 is configured as a corn header with a number of row units defined in part by snouts 34. Each row unit may include stripper rolls, etc, which are not visible in Fig. 1. A double auger 38 feeds the crop laterally inwardly from each side toward feeder housing 20. Feeder housing 20 conveys the cut crop to threshing and separating system 24, and is selectively vertically movable using appropriate actuators, such as hydraulic cylinders (not shown). The header 18 may also be configured as a different type of header, such as a grain cutting platform (e.g., a bean header).

Threshing and separating system 24 is of the axial-flow type, and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an airflow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Tailings from cleaning system 26 fall to a tailings auger trough 62. The tailings are transported via tailings auger 64 and return auger 66 to the upstream end of cleaning system 26 for repeated cleaning action. Cross augers 68 at the bottom of grain tank 28 convey the clean grain within grain tank 28 to unloading auger 30 for discharge from combine 10.

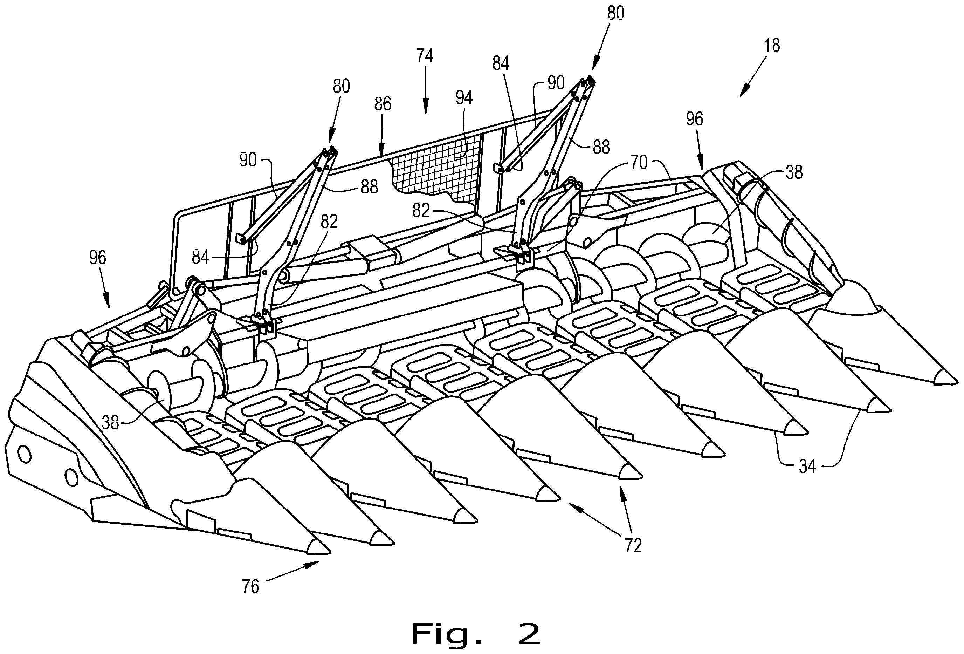

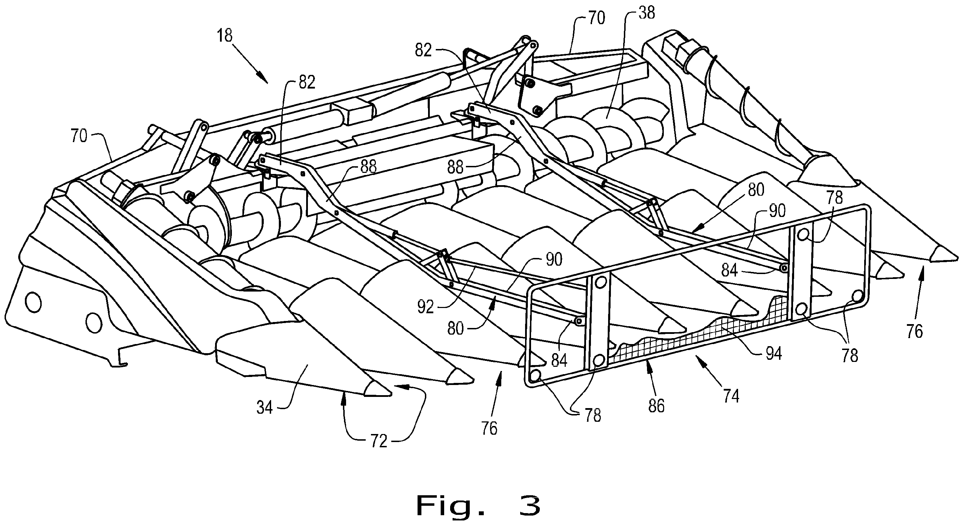

Referring now to Figs. 2 and 3, the header 18 generally includes a framework 70, a crop gathering arrangement 72, and a homologation frame 74. The crop gathering arrangement 72 defines a forward end 76 of the header 18, and functions to sever the crop from the field, gather the crop and transport the crop toward the double auger 38. With the header configured as a corn header as shown in Figs. 2 and 3, the crop gathering arrangement 72 includes the snouts 34, and can also include stripper plates and stripper rolls (not visible). In the case of a grain cutting platform (not shown), the crop gathering arrangement can include a cutter bar and also possibly a reel which moves the crop toward the double auger or draper conveyor(s), as the case may be.

The homologation frame 74 is attachable to the framework 70 and has at least one visibility enhancing safety feature 78, such as a a light, a vehicle marker board, a reflector or some other type of easily visible indicia (e.g., red and white stripes, etc). In contrast with conventional homologation frames which are separate from and manually attached to the header for road transport, the homologation frame 74 is integral with the header 18 and remotely movable by an operator between a harvest postion (Fig. 2) and a road transport position (Fig. 3) using a suitable remotely operated actuator such as a hydraulic or electric actuator.

More specifically, the homologation frame 74 includes a pair of arms 80 which are pivotally attached to the framework 70 and movable between an upright, harvest position and a downward, transport position. Each arm 80 has a rearward end 82 which is pivotally attached to the framework 70, and a foward end 84 which is pivotally attached to a display frame 86. The display frame 86 can be rectangular shaped, as shown, or can have some other suitable shape depending on the frontal profile shape of the header 18. The one or more visibility enhancing safety features 78 are located on the display frame 86, and are positioned in association with the forward end 76 of the header 18 when the homologation frame 74 is in the downward position. In the illustrated embodiment, the visibility enhancing safety features 78 are shown as simple reflectors on the display frame 86 which are visible to oncoming traffic when the combine 10 is traveling on a public road.

Each arm 80 can include a two-part folding arrangement with a rearward portion 88 having a rearward end 82 which is pivotally attached to the framework 70, and a forward portion 90 which is pivotally attached to the rearward portion 88. The righthand arm 80 (as viewed by the operator) includes a link 92 which interconnects between the rearward portion 88 and the display frame 86, thereby effecting pivotal movement of the display frame 86 relative to each arm 80 as the rearward portion 88 and the forward portion 90 pivot relative to each other. Alternatively, each arm 80 can include a link 92 for effecting pivotal movement of the display frame 86, upon folding and unfolding of the arms 80. The link 92 is shown as a simple interconnecting rod, but can be differently configured, depending on the application.

The display frame 86 is pivotally attached to the forward end 84 of each forward portion 90. The display frame 86 is positioned generally parallel to each forward portion 90 when the homologation frame 74 is in the upright position (Fig. 2), and is positioned generally orthogonal to each foward portion 90 when the homologation frame 74 is in the downward position (Fig. 3). As can be seen in Fig. 2, the display frame 86 is not exactly parallel to the forward portion 90, but is at a small acute angle relative to the forward portion 90. Thus, the term "parallel", as used herein, is intended to cover a parallel orientation as well as a small acute angle of up to approximately 15 to 20°.

From more of a safety perspective, the orientation of the display frame 86 is more important when the homologation frame 74 is in the unfolded, downward, road transport position. That is, the display frame 86 should be positioned such that the visibility enhancing safety features 78 are visible to oncoming traffic when the combine 10 is traveling on a public road. Thus, the display frame 86 should be in an upright (not necessarily vertical) orientation when the arms 80 are in the downward position.

The homologation frame 74 can also include a screen 94 which is attached to the display frame 86. Only a fragmentary portion of screen 94 is visible in Figs. 2 and 3 for ease of illustration. The screen 94 is operative to be positioned in a generally upright orientation above the header 18, adjacent to the inlet of the feeder housing 20, when the homologation frame 74 is in the upright position. When positioned at the rear of the header 18 in the harvest position, the screen 94 inhibits a buildup of crop material on top of the feeder housing 20, which can in turn inhibit damage to the top of the feeder housing 20 and/or the bottom of the operator cab 22.

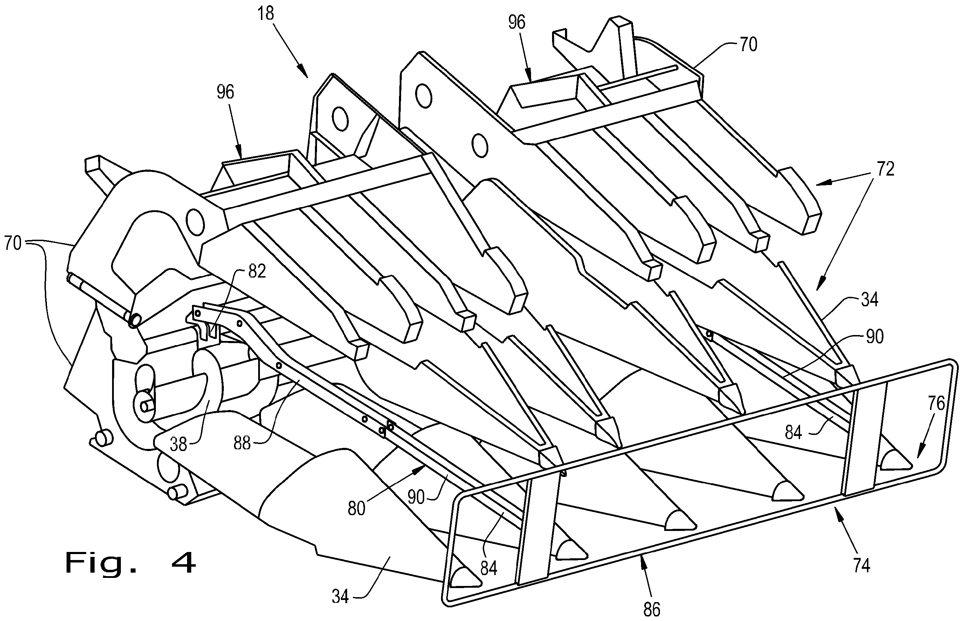

During operation of the combine 10, the header 18 includes a pair of outer wing sections 96 which can be folded or unfolded for a transport or harvest mode, respectively. The header 18 can be movable from a harvest position to a transport position by first moving the homologation frame 74 to an unfolded, downward position (Fig. 3), and then moving the outer wing sections 96 to a folded, transport position (Fig. 4). Conversely, the header 18 can be movable from the transport position to the harvest position by first moving the outer wing sections 96 to an unfolded, harvest position (Fig. 3), and then moving the homologation frame 74 to a folded, upright position (Fig. 2).

In the embodiment of homologation frame 74 shown in Figs. 2-4 and described above, the arms 80 are of a two-part design and the screen 94 is located on the display frame 86. However, homologation frame 74 can be differently configured and still foldable relative to the framework 70 of the header 18. For example, the arms 80 can be one-piece arms and the screen 94 can be attached to and extend between the rearward ends 82 of the arms 80. Configured as such, the display frame 86 would be positioned near the top of the operator cab 22 when the arms 80 are in the upright or harvest position, out of the line of sight of the operator, and positioned near the forward end 76 when the arms 80 are in the down or transport position. The screen 94 would also inhibit the buildup of crop material on the feeder housing 20 when the arms 80 are in the upright position.

## Claims

1. A header (18) for an agricultural harvester (10), comprising:
a framework (70);
a crop gathering arrangement (72) defining a forward end (76) of the header (18); and
a homologation frame (74) attachable to the framework (70) and having at least one visibility enhancing safety feature (78);
**characterized in that:**
the homologation frame (74) includes at least two arms (80) which are pivotally attached to the framework (70), the homologation frame (74) being movable between an upright position in which the arms (80) extend in a generally upward direction and a downward position in which the arms (80) extend in a generally forward direction, the at least one visibility enhancing safety feature (78) being positioned in association with the forward end (76) of the header (18) when the homologation frame (74) is in the downward position, such that the at least one visibility enhancing safety feature (78) is visible from a front of the harvester (10).

2. The header (18) of claim 1, wherein the at least two arms (80) comprise a pair of arms (80), each arm (80) having a rearward end (82) which is pivotally attached to the framework (74), and a foward end (84) which carries a display frame (86), the at least one visibility enhancing safety feature (78) being located on the display frame (86).

3. The header (18) of claim 1, wherein each said visibility enhancing safety feature (78) is a light, a reflector or a visible indicia.

4. The header (18) of claim 1, wherein the homologation frame (74) includes a screen (94) which is operative to be positioned in a generally upright orientation above the header (18) when the homologation frame (74) is in the upright position, such that the screen (94) inhibits a buildup of crop material on a rear side of the screen (94).

5. The header (18) of claim 4, wherein each said arm (80) has a forward end (82) which is attached to a display frame (86), and the screen (94) is attached to the display frame (86).

6. The header (18) of claim 1, wherein each said arm (80) has a forward end (82) attached to a display frame (86) which is operative to be positioned in a generally vertical orientation when the homologation frame (74) is in the downward position.

7. The header (18) of claim 6, wherein the display frame (86) is pivotally attached to the forward end (82) of each said arm (80), and is positioned generally parallel to each said arm (80) when the homologation frame (74) is in the upright position, and is positioned generally orthogonal to each said arm (80) when the homologation frame (74) is in the downward position.

8. The header (18) of claim 7, wherein each said arm (80) includes a two-part folding arrangement with a rearward portion (88) which is pivotally attached to the framework (74), and a forward portion (90) which is pivotally attached to the rearward portion (88), and wherein the display frame (86) is pivotally attached to a forward end of each said forward portion (90).

9. The header (18) of claim 8, wherein at least one said arm (80) includes a link (92) which interconnects between the rearward portion (88) and the display frame (86), thereby effecting pivotal movement of the display frame (86) relative to the respective arm (80) as the rearward portion (88) and forward portion (90) pivot relative to each other.

10. The header (18) of claim 9, wherein the display frame (86) is positioned generally parallel to each said forward portion (90) when the homologation frame (74) is in the upright position, and is positioned generally orthogonal to each said foward portion (90) when the homologation frame (74) is in the downward position.

11. The header (18) of claim 1, wherein the header (18) is a corn header or a grain cutting platform.

12. The header (18) of claim 1, wherein the header (18) comprises a corn header and the crop gathering arrangement (72) includes a plurality of snouts (34), and wherein the at least one visibility enhancing safety feature (78) is positioned adjacent to a forward end (82) of the plurality of snouts (34) when the homologation frame (74) is in the downward position.

13. The header (18) of claim 1, wherein the header (18) includes a pair of outer wing sections (96), and is movable from a harvest position to a transport position by first moving the homologation frame (74) to an unfolded, downward position, and then moving the outer wing sections (96) to a folded, transport position.

14. The header (18) of claim 13, wherein the header (18) is movable from the transport position to the harvest position by first moving the outer wing sections (96) to an unfolded, harvest position, and then moving the homologation frame (74) to a folded, upright position.

## Patentansprüche

1. Erntevorsatz (18) für eine landwirtschaftliche Erntemaschine (10) mit:
einem Rahmengestell (70);
einer Erntegutpflückanordnung (72), die ein vorderes Ende (76) des Erntevorsatzes (18) definiert; und
einem Homologationsrahmen (74), der an dem Rahmengestell (70) anbringbar ist und mindestens ein Sicherheitsmerkmal (78) aufweist, das die Sichtbarkeit verbessert;
**dadurch gekennzeichnet, dass**:
der Homologationsrahmen (74) mindestens zwei Arme (80) umfasst, die drehbar an dem Rahmengestell (70) angebracht sind, wobei der Homologationsrahmen (74) zwischen einer aufrechten Position, in der die Arme (80) sich in einer im Allgemeinen nach oben gerichteten Richtung erstrecken, und einer nach unten gerichteten Position bewegbar ist, in der die Arme (80) sich in einer im Allgemeinen nach vorne gerichteten Richtung erstrecken, wobei das mindestens eine Sicherheitsmerkmal (78), das die Sichtbarkeit verbessert, in Verbindung mit dem vorderen Ende (76) des Erntevorsatzes (18) angeordnet ist, wenn der Homologationsrahmen (74) sich in der nach unten gerichteten Position befindet, so dass das mindestens eine Sicherheitsmerkmal (78), das die Sichtbarkeit verbessert, von einer Vorderseite der Erntemaschine (10) sichtbar ist.

2. Erntevorsatz (18) nach Anspruch 1, wobei die mindestens zwei Arme (80) ein Paar von Armen (80) aufweisen, wobei jeder Arm (80) ein hinteres Ende (82), das drehbar an dem Rahmengestell (74) befestigt ist, und ein vorderes Ende (84) aufweist, das einen Anzeigerahmen (86) trägt, wobei das mindestens eine Sicherheitsmerkmal (78), das die Sichtbarkeit verbessert, sich auf dem Anzeigerahmen (86) befindet.

3. Erntevorsatz (18) nach Anspruch 1, wobei jedes Sicherheitsmerkmal (78), das die Sichtbarkeit verbessert, eine Leuchte, einen Reflektor oder eine sichtbare Markierung ist.

4. Erntevorsatz (18) nach Anspruch 1, wobei der Homologationsrahmen (74) ein Schirmelement (94) umfasst, das betriebsbereit ist, um in einer im Allgemeinen aufrechten Ausrichtung oberhalb des Erntevorsatzes (18) angeordnet zu sein, wenn der Homologationsrahmen (74) sich in der aufrechten Position befindet, so dass das Schirmelement (94) ein Ansammeln von Erntematerial auf einer Rückseite des Schirmelements (94) verhindert.

5. Erntevorsatz (18) nach Anspruch 4, wobei jeder Arm (80) ein vorderes Ende (82) aufweist, das an einem Anzeigerahmen (86) befestigt ist und wobei das Schirmelement (94) an dem Anzeigerahmen (86) befestigt ist.

6. Erntevorsatz (18) nach Anspruch 1, wobei jeder Arm (80) ein vorderes Ende (82) aufweist, das an einem Anzeigerahmen (86) befestigt ist und das betriebsbereit ist, in einer im Allgemeinen vertikalen Ausrichtung angeordnet zu sein, wenn der Homologationsrahmen (74) sich in der nach unten gerichteten Position befindet.

7. Erntevorsatz (18) nach Anspruch 6, wobei der Anzeigerahmen (86) drehbar an dem vorderen Ende (82) jedes Arms (80) befestigt ist und im Allgemeinen parallel zu jedem Arm (80) angeordnet ist, wenn der Homologationsrahmen (74) sich in der aufrechten Position befindet, und im Allgemeinen senkrecht zu jedem Arm (80) angeordnet ist, wenn der Homologationsrahmen (74) sich in der nach unten gerichteten Position befindet.

8. Erntevorsatz (18) nach Anspruch 7, wobei jeder Arm (80) eine zweiteilige Faltanordnung mit einem hinteren Abschnitt (88), der drehbar an dem Rahmengestell (74) befestigt ist, und einem vorderen Abschnitt (90) umfasst, der drehbar an dem hinteren Abschnitt (88) befestigt ist, und wobei der Anzeigerahmen (86) drehbar an einem vorderen Ende jedes vorderen Abschnitts (90) befestigt ist.

9. Erntevorsatz (18) nach Anspruch 8, wobei mindestens ein Arm (80) ein Verbindungselement (92) umfasst, das den hinteren Abschnitt (88) und den Anzeigerahmen (86) miteinander verbindet, wodurch eine Drehbewegung des Anzeigerahmens (86) relativ zu dem entsprechenden Arm (80) bewirkt wird, wenn sich der hintere Abschnitt (88) und der vordere Abschnitt (90) relativ zueinander drehen.

10. Erntevorsatz (18) nach Anspruch 9, wobei der Anzeigerahmen (86) im Allgemeinen parallel zu jedem vorderen Abschnitt (90) angeordnet ist, wenn sich der Homologationsrahmen (74) in der aufrechten Position befindet, und im Allgemeinen senkrecht zu jedem vorderen Abschnitt (90) angeordnet ist, wenn der Homologationsrahmen (74) sich in der nach unten gerichteten Position befindet.

11. Erntevorsatz (18) nach Anspruch 1, wobei der Erntevorsatz (18) ein Maispflücker oder eine Getreideschneideplattform ist.

12. Erntevorsatz (18) nach Anspruch 1, wobei der Erntevorsatz (18) einen Maispflücker umfasst und die Erntegutpflückanordnung (72) eine Mehrzahl von Schnauzen bzw. Hauben (34) aufweist und wobei das mindestens eine Sicherheitsmerkmal (78), das die Sichtbarkeit verbessert angrenzend an ein vorderes Ende (82) der Mehrzahl von Schnauzen (34) angeordnet ist, wenn der Homologationsrahmen (74) sich in der nach unten gerichteten Position befindet.

13. Erntevorsatz (18) nach Anspruch 1, wobei der Erntevorsatz (18) ein Paar von äußeren Flügelabschnitten (96) umfasst und von einer Ernteposition in eine Transportposition bewegbar ist, indem zuerst der Homologationsrahmen (74) in eine ungefaltete, nach unten gerichtete Position bewegt wird und anschließend die äußeren Flügelabschnitte (96) in eine gefaltete Transportposition bewegt werden.

14. Erntevorsatz (18) nach Anspruch 13, wobei der Erntevorsatz (18) aus der Transportposition in die Ernteposition bewegbar ist, indem zuerst die äußeren Flügelabschnitte (96) in eine ungefaltete Ernteposition bewegt werden und anschließend der Homologationsrahmen (74) in eine gefaltete, aufwärts gerichtete Position bewegt wird.

## Revendications

1. Tête de coupe (18) pour une récolteuse agricole (10), comprenant :
un bâti (70),
un agencement de récolte de produit de culture (72) définissant une extrémité avant (76) de la tête de coupe (18), et
un cadre d'homologation (74) pouvant être fixé au bâti (70) et comportant au moins un dispositif de sécurité améliorant la visibilité (78),
**caractérisée en ce que :**
le cadre d'homologation (74) comprend au moins deux bras (80) qui sont fixés de façon pivotante au bâti (70), le cadre d'homologation (74) étant mobile entre une position verticale dans laquelle les bras (80) s'étendent dans une position généralement vers le haut, et une position abaissée dans laquelle les bras (80) s'étendent dans une position généralement vers l'avant, le au moins un dispositif de sécurité (78) améliorant la visibilité étant positionné en association avec l'extrémité avant (76) de la tête de coupe (18) lorsque le cadre d'homologation (74) est dans la position abaissée, de telle sorte que le au moins un dispositif de sécurité améliorant la visibilité (78) est visible de l'avant de la récolteuse (10).

2. Tête de coupe (18) selon la revendication 1, dans laquelle les au moins deux bras (80) comprennent une paire de bras (80), chaque bras possédant une extrémité arrière (82) qui est fixée de façon pivotante au bâti (74), et une extrémité avant (84) qui porte un cadre d'affichage (86), le au moins un dispositif de sécurité améliorant la visibilité (78) étant disposé sur le cadre d'affichage (86).

3. Tête de coupe (18) selon la revendication 1, dans laquelle chaque dit dispositif de sécurité améliorant la visibilité (78) est une lampe, un réflecteur ou un signe visible.

4. Tête de coupe (18) selon la revendication 1, dans laquelle le cadre d'homologation (74) comprend une grille (94) qui est agencée pour être positionnée dans une orientation généralement verticale au-dessus de la tête de coupe (18) lorsque le cadre d'homologation (74) est dans la position verticale, de telle sorte que la grille (94) empêche l'accumulation de matériau de culture sur un côté arrière de la grille (94).

5. Tête de coupe (18) selon la revendication 4, dans laquelle chaque dit bras (80) a une extrémité avant (82) qui est fixée à un cadre d'affichage (86), et la grille (94) est fixée au cadre d'affichage (86).

6. Tête de coupe (18) selon la revendication 1, dans laquelle chaque dit bras (80) a une extrémité avant (82) fixée à un cadre d'affichage (86) agencé pour être positionné dans une orientation généralement verticale quand le cadre d'homologation (74) est dans la position abaissée.

7. Tête de coupe (18) selon la revendication 6, dans laquelle le cadre d'affichage (86) est fixé de façon pivotante à l'extrémité avant (82) de chaque dit bras (80) et est positionné généralement parallèlement à chaque dit bras (80) quand le cadre d'homologation (74) est dans la position verticale, et est positionné généralement perpendiculairement à chaque dit bras (80) quand le cadre d'homologation (74) est dans la position abaissée.

8. Tête de coupe (18) selon la revendication 7, dans laquelle chaque dit bras (80) comprend un agencement d'accouplement pliable à deux parties comportant une partie arrière (88) qui est fixée de façon pivotante au bâti (74) et une partie avant (90) qui est fixée de façon pivotante à la partie arrière (88), et en ce que le cadre d'affichage (86) est fixé de façon pivotante à une extrémité avant de chaque dite partie avant (90).

9. Tête de coupe (18) selon la revendication 8, dans laquelle at least un dit bras (80) comprend une biellette (92) qui interconnecte la partie arrière (88) et le cadre d'affichage, en engendrant par ce moyen un mouvement de pivotement du cadre d'affichage (86) par rapport au bras respectif (80) lorsque la partie arrière (88) et la partie avant (90) pivotent l'une par rapport à l'autre.

10. Tête de coupe (18) selon la revendication 9, dans laquelle le cadre d'affichage (86) est positionné généralement parallèlement à chaque dite partie avant (90) lorsque le cadre d'homologation (74) est dans la position verticale, et est positionné généralement perpendiculairement à chaque dite partie avant (90) quand le cadre d'homologation (74) est dans la position abaissée.

11. Tête de coupe (18) selon la revendication 1, dans laquelle la tête de coupe (18) est un cueilleur de maïs ou une plateforme de coupe de céréales.

12. Tête de coupe (18) selon la revendication 1, dans laquelle la tête de coupe (18) comprend un cueilleur de maïs et l'agencement de récolte de produit de culture (72) comprend une pluralité de becs (34), et en ce que le au moins un dispositif de sécurité améliorant la visibilité (78) est positionné de façon adjacente à une extrémité avant (82) de la pluralité des becs (34) quand le cadre d'homologation (74) est dans la position abaissée.

13. Tête de coupe (18) selon la revendication 1, dans laquelle la tête de coupe (18) comprend une paire de sections d'aile extérieure (96), et est mobile d'une position de récolte à une position de transport en déplaçant d'abord le cadre d'homologation (74) vers une position déployée vers le bas, et en déplaçant ensuite les sections d'aile extérieure (96) vers une position de transport, repliée.

14. Tête de coupe (18) selon la revendication 13, dans laquelle la tête de coupe (18) est mobile de la position de transport à la position de récolte en déplaçant d'abord les sections extérieures d'aile (96) vers une position de récolte, déployée et en déplaçant ensuite le cadre d'homologation (74) vers une position verticale, repliée.
